# EUROPÄISCHE PATENTSCHRIFT

(11) **EP 1 369 155 B1**
(45) Veröffentlichungstag und Bekanntmachung des Hinweises auf die Patenterteilung: **11.01.2006**
(21) Anmeldenummer: 03012672.6
(22) Anmeldetag: 04.06.2003
(51) Int. Cl.: B01D 11/02, F16J 13/06, F16J 13/20

(54) **Verfahren zur Extraktion von Inhaltsstoffen aus einem Extraktionsgut und Vorrichtung dazu**
Process of extracting of constituents from a substrate and apparatus therefor
Procédé d'extraction de constituants d'un substrat et dispositif pour ledit procédé

(30) Priorität: 05.06.2002 DE 10225079
(43) Veröffentlichungstag der Anmeldung: 10.12.2003
(73) Patentinhaber: Büttner, Andreas, 55543 Bad Kreuznach (DE)
(72) Erfinder: Büttner, Andreas, 55543 Bad Kreuznach (DE)
(74) Vertreter: Becker, Bernd

(56) Entgegenhaltungen:
- EP-A- 0 439 710
- EP-A- 1 180 386
- DE-A- 2 063 023
- DE-U- 20 210 985
- US-A- 4 486 453

## Beschreibung

Die Erfindung bezieht sich auf ein Verfahren Verfahren zur Extraktion von Inhaltsstoffen aus einem Extraktionsgut, insbesondere aus zerkleinertem Pflanzenmaterial, mit einem flüssigen Lösungsmittel, das unter Druckbeaufschlagung mit schlagartigen Druckwechseln mindestens einen Extraktionsreaktor mit dem Extraktionsgut durchströmt und eine Vorrichtung dazu.

Aus der DE 31 23 588 C2 ist eine Vorrichtung für die kontinuierliche Extraktion durch Lösung unter Druck bekannt. Die Vorrichtung umfasst eine in einem Gehäuse gelagerte Druck-Schraube für den Transport von zusammendrückbarem, festen Material von einem Feststoff-Eingang zu einem Feststoff-Ausgang und einen Zuführstutzen am Feststoff-Eingang, der senkrecht zu dem Gehäuse der Druck-Schraube angeordnet ist. Die Druck-Schraube und das Gehäuse weisen eine konische Form auf, deren größerer Durchmesser sich an Feststoff-Eingang und deren kleinerer Durchmesser sich am Feststoff-Ausgang befindet. Der Feststoff und die Lösung bewegen sich in entgegengesetzten Richtungen. Durch die Rotation der Druck-Schraube wird der Druck auf den Feststoff zunehmend vergrößert, womit der Stoffaustausch erschwert und die Wertstoffausbeute verringert wird.

Im Weiteren offenbart die EP 0 439 710 A2 ein Verfahren zur Entkoffeinierung von Rohkaffee durch selektive Exttraktion des Coffeins mit einem unter Normalbedingungen flüssigen Lösungsmittel. Die Rohkaffeebohnen werden mit dem mit Kohlendioxid gesättigten flüssigen Lösungsmittel bei einer Temperatur von 20°C bis 110°C und einem Druck von 30 bar bis 300 bar für eine bis einige Stunden extrahiert. Die Druckatmosphäre wird schlagartig oder in wenigen Minuten auf 1 bar bis 10 bar entspannt. Anschließend werden die entspannten Rohkaffeebohnen mit dem flüssigen Lösungsmittel für einigen Minuten bis zwei Stunden nachgespült. Darüber hinaus wird der Vorgang der selektiven Coffeinextraktion mit dem mit Kohlendioxid gesättigten flüssigen Lösungsmittel bei erhöhtem Druck, des Entspannens und des Nachspülens der Rohkaffeebohnen mit dem flüssigen Lösungsmittel bei einem niedrigeren Druck gegebenenfalls wiederholt. Die mit Wasser beladenen Rohkaffeebohnen werden durch Trocknunng auf einen für die nachfolgende Röstung notwendigen minimalen Wassergehalt gebracht und die entcoffeinierten sowie vorgetroockneteen Rohkaffeebohnen geröstet. Das Coffein wird aus dem flüssigen Lösungsmittel selektiv abgetrennt und in kristallreiner Form gewonnen.

Es ist Aufgabe der Erfindung, ein Verfahren und eine Vorrichtung der eingangs genannten Art zu schaffen, das bzw. die eine hohe Wertstoffausbeute gewährleistet.

Erfindungsgemäß wird die Aufgabe bei einem Verfahren nach dem Oberbegriff des Anspruchs 1, dadurch gelöst, dass das Lösungsmittel den Extraktionsreaktor mit Wechseln der Strömungsrichtung durchströmt, wobei das Lösungsmittel durch ein zentrales Verteilerrohr innerhalb des Extraktionsreaktors geleitet wird.

Durch die schlagartigen, sich im gesamten hydraulischen System und damit auch im Extraktionsreaktor auswirkenden Druckwechsel des Lösungsmittels während der kontinuierlichen Extraktion, erfolgt eine Umschichtung und eine stoffabhängige Porenöffnung des Extraktionsgutes im Extraktionsreaktor. Mit diesem dynamischen Konvektionsverfahren zur Extraktion ist eine relativ hohe Wertstoffausbeute bei einem geringen apparativen Aufwand sichergestellt. Der Bereich der Druckbeaufschlagung, unter dem die Extraktion stattfindet, erstreckt sich im Sinne der Erfindung beispielsweise von einem Unterdruck bis zu einem gegenüber dem Normaldruck erhöhten Druck im System. Mit den Wechseln der Strömmungsrichtung des Lösungsmittels wird eine zusätzliche Umschichtung des Extraktionsgutes und damit eine zusätzliche Intensivierung des Stoffaustauschs erzielt. Das zentrale Verteilerrohr innerhalb des Extraktionsreaktors stellt eine innige Durchdringung und Durchströmung des Extraktionsgutes sicher.

Zweckmäßigerweise wird das Lösungsmittel temperiert.

Um eine ausschließliche Befüllung des Extraktionsreaktors mit dem Extraktionsgut und dem Lösungsmittel zu gewährleisten, wird vorteilhafterweise ein in dem Extraktionsreaktor vorhandenes Gas über ein Entlüftungsventil abgeleitet. Das Gas wird in einen Lösungsmittelbehälter geleitet.

Damit mit Wertstoff beladenes Lösungsmittel vor der Entnahme des Extraktionsgutes aus dem Extraktionsreaktor aus Zwickeln und Poren des Extraktionsgutes gewonnen wird, wird bevorzugt bei einer Trocknung des Extraktionsgutes in dem Extraktionsreaktor ein Unterdruck erzeugt. Der erzeugte Unterdruck entspricht hierbei beispielsweise dem Dampfdruck des Lösungsmittels.

Vorzugsweise strömt vor einer Entleerung des Extraktionsreaktors das Gas aus dem Lösungsmittelbehälter in den Extraktionsreaktor über. Durch das Einströmen des Gases, beispielsweise von Luft, in den Extraktionsreaktor, wird das noch in dem System vorhandene, mit Wertstoff beladene Lösungsmittel in den Lösungsmittelbehälter gefördert.

Um die Durchdringung des Extraktionsgutes mit dem Lösungsmittel in dem Extraktionsreaktor und ein Umschichten des Extraktionsgutes mittels Druck- bzw. Druckrichtungswechseln zu bewerkstelligen, wird das Extraktionsgut in mindestens einen Siebkorb in dem Extraktionsreaktor gegeben.

Nach einer vorteilhaften Weiterbildung der Erfindung wird der Extraktionsreaktor vor einer Druckbeaufschlagung des Lösungsmittels mit einer Sicherungsvorrichtung derart gesichert, dass einen Deckel festlegende Verschraubungen nicht zu lösen sind. Zweckmäßigerweise werden die Verschraubungen im drucklosen Zustand des Extraktionsreaktors von der Sicherungsvorrichtung zum Lösen freigegeben. Damit ist ein Öffnen des Extraktionsreaktors im druckbeaufschlagten Zustand während der Extraktion ausgeschlossen.

Erfindungsgemäß wird die Aufgabe bei einer Vorrichtung nach dem Oberbegriff des Anspruchs 10 dadurch gelöst, dass in den Kreislauf ein Druckregelventil zur Regulierung des Druckes des Lösungsmittels sowie ein Absperrventil eingesetzt ist, wobei das Absperrventil derart angeordnet ist, dass durch dessen Öffnen ein schlagartiger Druckabfall des Lösungsmittels im Extraktionsreaktor erzeugt wird, zwischen dem Lösungsmittelbehälter und einem Wärmetauscher eine Pumpe mit umkehrbarer Förderrichtung angeordnet ist und in dem Zentrum des Extraktionsreaktors ein vertikales Verteilerrohr für das Lösungsmittel angeordnet ist, das mit dem Vorlauf in Verbindung steht.

Aufgrund dieser Maßnahmen ist eine Umschichtung des Extraktionsgutes durch Anheben des Druckes des Lösungsmittels mit dem Druckregelventil sowie den schlagartigen Druckabfall des Lösungsmittels im Extraktionsreaktor und somit auch im übrigen System sichergestellt und damit eine relativ hohe Wertstoffausbeute gewährleistet. Selbstverständlich ist eine elektronische Ansteuerung sowohl des Druckregelventils als auch des Absperrventils möglich, um das kontinuierliche Extraktionsverfahren zu automatisieren. Zum Fördern des Lösungsmittels im Kreislauf sowie zum Wechsel von dessen Strömungsrichtung zur Umschichtung des Extraktionsgutes ist zwischen dem Lösungsmittelbehälter und dem Wärmetauscher die Pumpe mit umkehrbarer Förderrichtung angeordnet. Darüber hinaus gelangt das Lösungsmittel durch das Verteilerrohr direkt an das Extraktionsgut.

Zweckmäßigerweise sind das Druckregelventil und das Absperrventil in einen Rücklauf des Kreislaufes eingesetzt. Vorzugsweise ist das Absperrventil in einer Bypassleitung zu dem Druckregelventil angeordnet. Somit ist es nicht erforderlich, die Einstellung des Druckregelventils bei einem schlagartigen Druckabfall des Lösungsmittels im System zu ändern.

Um das Lösungsmittel auf einer für die Extraktion erforderlichen Temperatur zu halten, weist der Kreislauf den Wärmetauscher zur Temperierung des Lösungsmittels auf. Der Wärmetauscher ist beispielsweise dem Vorlauf des Kreislaufes zugeordnet.

Damit in dem Extraktionsreaktor während der Extraktion lediglich das Extraktionsgut und das Lösungsmittel vorliegen, ist vorteilhafterweise der Extraktionsreaktor in seinem oberen Bereich mit einem Entlüftungsventil versehen ist, das über eine Leitung mit dem Lösungsmittelbehälter gekoppelt ist. Gase und Dämpfe, die sich vor der Extraktion im System befinden oder während der Extraktion entstehen, werden aus dem Extraktionsreaktor abgeleitet und strömen in den Lösungsmittelbehälter.

Vorzugsweise umfasst der Lösungsmittelbehälter eine über ein Ventil mit dem Rücklauf verbundene Abluftleitung. Über die Abluftleitung können in dem Lösungsmittelbehälter vorhandene Gase strömen. Beim Öffnen des Ventils strömen die Gase aus dem Lösungsmittelbehälter in den Kreislauf und spülen das Wirkstoffe enthaltende Lösungsmittel aus dem Extraktionsbehälter in den Lösungsmittelbehälter, einen so genannten Vorlagebehälter.

Um Reste des mit Wirkstoffen aus der Extraktion versehenen Lösungsmittels aus dem Extraktionsbehälter zu saugen, ist bevorzugt in dem Rücklauf eine Absperrarmatur eingesetzt, deren Schließen bei entsprechender Förderrichtung der Pumpe einen Unterdruck in dem Extraktionsreaktor bewirkt. Der Unterdruck entspricht beispielsweise dem Dampfdruck des Lösungsmittels.

Zur innigen Durchströmung des Extraktionsgutes mit dem Lösungsmittel und zur Gewährleistung einer Umschichtung des Extraktionsgutes bei dem schlagartigen Druckabfall bzw. dem Druckrichtungswechsel/Strömungsrichtungswechsel des Lösungsmittels ist vorteilhafterweise in dem Extraktionsreaktor mindestens ein Siebkorb zur Aufnahme des Extraktionsgutes eingesetzt. Durch den umfangsseitig und bodenseitig mit Maschen versehenen Siebkorb ist darüber hinaus ein einfaches Entnehmen des Extraktionsgutes aus dem Extraktionsreaktor möglich.

Nach einer vorteilhaften Ausgestaltung der Erfindung ist einem Deckel des Extraktionsreaktors eine Sicherungsvorrichtung zugeordnet, die bei einer Druckbeaufschlagung des Extraktionsreaktors ein Öffnen des Deckels verhindert. Zweckmäßigerweise gibt die Sicherungsvorrichtung den Deckel im drucklosen Zustand des Extraktionsreaktors frei. Damit gehr eine Reduzierung der Unfallgefahr einher. Zum selbsttätigen Sichern bzw. Freigeben des Deckels kann die Sicherungsvorrichtung mit einer entsprechenden Steuerung verbunden werden, so dass ein manueller Eingriff zur Betätigung der Sicherungsvorrichtung nicht erforderlich ist.

Bevorzugt umfasst die Sicherungsvorrichtung einen an dem Extraktionsreaktor zwangsgesteuert schwenkbar angeordneten Ring, der sich in seiner Sicherungslage konzentrisch zu dem Deckel unmittelbar oberhalb den Deckel im geschlossenen Zustand fixierender Verschraubungen befindet. Somit ist der Zugang zu den Verschraubungen und damit ein Lösen derselben zum Öffnen des Deckels durch den Ring verhindert.

Zur Verlagerung des Ringes weist die Sicherungsvorrichtung eine zum einen dem Extraktionsreaktor und zum anderen dem Ring zugeordnete Kolben-Zylinder-Einheit zum Verschwenken des Ringes auf.

Vorzugsweise steht die Kolben-Zylinder-Einheit mit dem Ventil derart in Verbindung, dass ein Öffnen des Ventils zum Entlüften des Extraktionsreaktors ein Verschwenken des Ringes in seine Nicht-Sicherungslage, in der die Verschraubungen zu lösen sind, bewirkt. Nach dem Entlüften des Extraktionsreaktors ist derselbe drucklos und der Deckel ist gefahrlos zu öffnen.

Um mit einfachen Mitteln eine Schwenkbewegung des Ringes bei einer Beaufschlagung durch die Kolben-Zylinder-Einheit zu bewerkstelligen, ist die Kolben-Zylinder-Einheit unter Zwischenschaltung eines Winkelstückes mit dem Ring gekoppelt, wobei der eine Winkelschenkel, an dem die extraktionsreaktorfeste Kolben-Zylinder-Einheit angreift, an seinem freien Ende an dem Extraktionsreaktor gelagert und der andere Winkelschenkel endseitig mit dem Ring verbunden ist.

Die Erfindung wird im Folgenden anhand eines Ausführungsbeispieles unter Bezugnahme auf die zugehörigen Zeichnungen näher erläutert. Es zeigen:

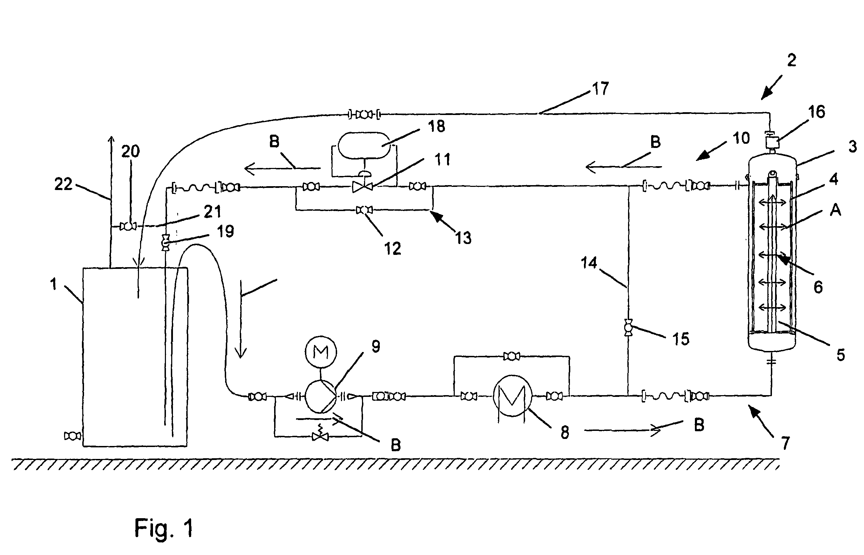

- Fig.1: eine schematische Darstellung einer erfindungsgemäßen Vorrichtung während des Verfahrensschrittes einer Extraktion,

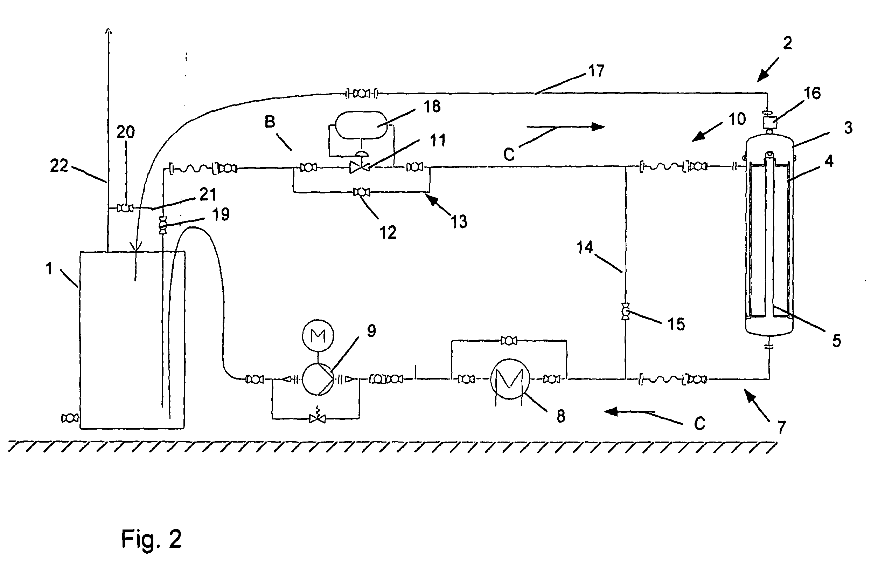

- Fig.2: eine schematische Darstellung der Vorrichtung nach Fig. 1 während des Verfahrensschrittes einer Rückspülung,

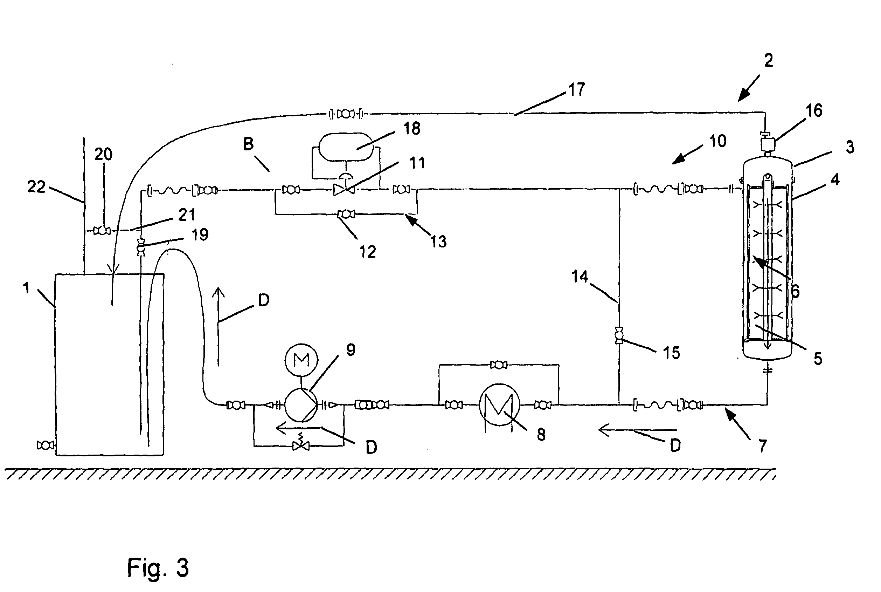

- Fig.3: eine schematische Darstellung der Vorrichtung nach Fig. 1 während der Verfahrensschritte einer Evakuierung und Entleerung und

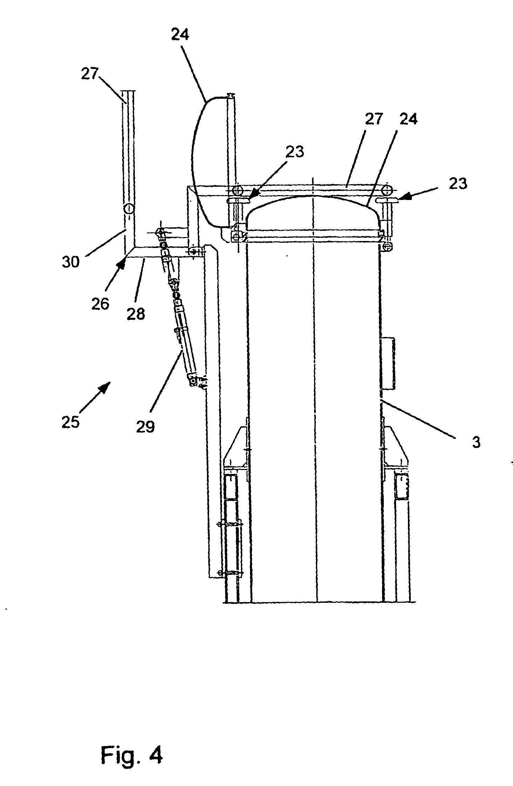

- Fig.4: eine vereinfachte Darstellung eines Extraktionsreaktors der Vorrichtung nach Fig. 1.

Die Vorrichtung umfasst einen Lösungsmittelbehälter 1, der im Wesentlichen mit einem Lösungsmittel gefüllt und in einem Kreislauf 2 mit einem Extraktionsreaktor 3 geschaltet ist. In den Extraktionsreaktor 3 sind mehrere Siebkörbe 4 mit dem Extraktionsgut, nämlich zerkleinertem Pflanzenmaterial, eingesetzt. Im Weiteren ragt in das Zentrum des Extraktionsreaktors 3 ein vertikal ausgerichtetes Verteilerrohr 5, das mit radialen Bohrungen 6 zum Austritt des Lösungsmittels gemäß den Doppelpfeilen A versehen ist und das mit einem Vorlauf 7 des Kreislaufes 2 in Verbindung steht.

In den Vorlauf 7 ist ein Wärmetauscher 8 mit vorgeschalteter Pumpe 9 eingesetzt, wobei die Pumpe 9 das Lösungsmittel aus dem Lösungsmittelbehälter 1 ansaugt und in den Extraktionsreaktor 3 fördert. In einem in den Lösungsmittelbehälter 1 führenden Rücklauf 10 des Kreislaufes 2 befinden sich ein Druckregelventil 11 zur Regulierung des Druckes des Lösungsmittels im System und ein Absperrventil 12, wobei das Absperrventil 12 in einer Bypassleitung 13 parallel zu dem Druckregelventil 11 angeordnet ist. Der Vorlauf 7 ist über eine Verbindungsleitung 14 mit einer eingesetzten Absperrarmatur 15 mit dem Rücklauf 10 verbunden.

Bei der Extraktion wird das Lösungsmittel in Richtung der Pfeile B von der Pumpe 9 über den Wärmetauscher 8 und das Verteilerrohr 5 in den Extraktionsreaktor 3 gepumpt. Anfangs ist hierbei ein dem Extraktionsreaktor 3 zugeordnetes Entlüftungsventil 16 geöffnet, so dass im Extraktionsreaktor 3 vorhandene Gase und Dämpfe über eine Leitung 17 in den Lösungsmittelbehälter 1 strömen und im Extraktionsbehälter 3 lediglich das Extraktionsgut und das Lösungsmittel vorliegen. Das Lösungsmittel strömt aus den Bohrungen 6 des Verteilerrohrs 5 und durchdringt das in den Siebkörben 4 aufgenommene Extraktionsgut, wobei im Extraktionsgut vorhandene Wertstoffe gelöst werden und mit dem Lösungsmittel in Richtung der Pfeile B zu dem Lösungsmittelbehälter 1 gefördert werden. Eine entsprechende Einstellung des mit einer Steuerung 18 verbundenen Druckregelventils 11 bewirkt das Durchströmen des Kreislaufes 2 mit einem bestimmten, relativ hohen hydrostatischen Druck des Lösungsmittels. Während der Extraktion wird zur Erzeugung eines schlagartigen Druckabfalls im System in bestimmten Zeitintervallen das Absperrventil 12 geöffnet und das Lösungsmittel gelangt über die Bypassleitung 13 in den Lösungsmittelmittelbehälter 1. Hierbei wird das Extraktionsgut im Extraktionsreaktor umgeschichtet, was eine stoffabhängige Porenöffnung zur Folge hat. Im Weiteren werden dem Lösungsmittel durch das in den Siebkörben 4 umgeschichtete Extraktionsgut neue Austausch-und Reaktionsflächen zur Verfügung gestellt, womit eine hohe Wertstoffausbeute einhergeht.

Bei einer Rückspülung des Lösungsmittels wird die Förderrichtung der Pumpe 9 umgekehrt und aufgrund der richtungsabhängigen Durchströmung des Druckregelventils 11 das Absperrventil 12 geöffnet, so dass das Lösungsmittel in Richtung der Pfeile C durch den Kreislauf 2 strömt. Bei der Rückspülung findet ebenfalls eine Umschichtung des Extraktionsgutes im Extraktionsreaktor 3 statt. Während des Rückspülens wird eine unmittelbar dem Lösungsmittelbehälter 1 nachgeschaltete, in den Rücklauf 10 eingesetzte Absperrarmatur 19 geschlossen. Mit dem Schließen der Absperrarmatur 19 wird in dem Kreislauf 2 ein Unterdruck erzeugt, der eine Rückgewinnung von mit Wertstoffen beladenem Lösungsmittel aus Zwickeln und Poren des Extraktionsgutes bewirkt. Darüber hinaus erfolgt eine Trocknung des Extraktionsgutes.

Vor dem Entleeren des Extraktionsreaktors 3 bzw. beim Evakuieren des Systems wird ein Ventil 20 geöffnet, das in eine Leitung 21 eingesetzt ist, die eine Abluftleitung 22 des Lösungsmittelbehälters 1 mit dem Rücklauf 10 verbindet. Beim Öffnen des Ventils 20 strömen Gase durch den Rücklauf 10 in den Extraktionsreaktor 3 und das noch vorhandene Lösungsmittel wird gemäß den Pfeilen D in den Lösungsmittelbehälter 1 gefördert.

Um den Extraktionsreaktor 3 während der Extraktion vor einem Öffnen seines mittels Verschraubungen 23 verschlossenen Deckels 24 zu schützen, ist eine Sicherungsvorrichtung 25 vorgesehen, die einen über ein Winkelstück 26 schwenkbar an dem Extraktionsreaktor 3 angelenkten Ring 27 umfasst. Der eine Winkelschenkel 28 des rechtwinkligen Winkelstückes 26, an dem eine extraktionsreaktorfeste Kolben-Zylinder-Einheit 29 angreift, ist an seinem freien Ende an dem Extraktionsreaktor 3 gelagert und der andere Winkelschenkel 30 ist endseitig mit dem Ring 27 verbunden. Der Ring 27 befindet sich in seiner Sicherungslage konzentrisch zu dem Deckel 24 unmittelbar oberhalb den Deckel 24 fixierender Verschraubungen 23, so dass ein Lösen der Verschraubungen 23 verhindert ist. Die Kolben-Zylinder-Einheit 29 ist über eine elektronische Steuereinheit mit dem Ventil 20 gekoppelt, so dass ein Öffnen des Ventils 20 zum Entlüften des Extraktionsreaktors 3 ein Verschwenken des Ringes 27 in seine Nicht-Sicherungslage, in der die Verschraubungen 23 zu lösen sind, bewirkt. Dementsprechend registriert die Steuereinheit ein Einschalten der Pumpe 9 zu Beginn der Extraktion und beaufschlagt die Kolben-Zylinder-Einheit 29, um den Ring 27 in seine Sicherungslage zu verschwenken.

Selbstverständlich können für weitere Extraktionsstufen zusätzliche Extraktionsbehälter mit dem Kreislauf 2 verbunden werden.

## Patentansprüche

1. Verfahren zur Extraktion von Inhaltsstoffen aus einem Extraktionsgut, insbesondere aus zerkleinertem Pflanzenmaterial, mit einem flüssigen Lösungsmittel, das unter Druckbeaufschlagung mit schlagartigen Druckwechseln mindestens einen Extraktionsreaktor (3) mit dem Extraktionsgut durchströmt, **dadurch gekennzeichnet, dass** das Lösungsmittel den Extraktionsreaktor (3) mit Wechseln der Strömungsrichtung durchströmt, wobei das Lösungsmittel durch ein zentrales Verteilerrohr (5) innerhalb des Extraktionsreaktors (3) geleitet wird.

2. Verfahren nach Anspruch 1, **dadurch gekennzeichnet, dass** das Lösungsmittel temperiert wird.

3. Verfahren nach Anspruch 1, **dadurch gekennzeichnet, dass** ein in dem Extraktionsreaktor (3) vorhandenes Gas über ein Entlüftungsventil (16) abgeleitet wird.

4. Verfahren nach Anspruch 3, **dadurch gekennzeichnet, dass** das Gas in einen Lösungsmittelbehälter (1) geleitet wird.

5. Verfahren nach einem der Ansprüche 1 bis 4, **dadurch gekennzeichnet, dass** bei einer Trocknung des Extraktionsgutes in dem Extraktionsreaktor (3) ein Unterdruck erzeugt wird.

6. Verfahren nach Anspruch 4 oder 5, **dadurch gekennzeichnet, dass** vor einer Entleerung des Extraktionsreaktors (3) das Gas aus dem Lösungsmittelbehälter (1) in den Extraktionsreaktor (3) überströmt.

7. Verfahren nach einem der Ansprüche 1 bis 6, **dadurch gekennzeichnet, dass** der Extraktionsreaktor (3) vor einer Druckbeaufschlagung des Lösungsmittels mit einer Sicherungsvorrichtung (25) derart gesichert wird, dass einen Deckel (24) festlegende Verschraubungen (23) nicht zu lösen sind.

8. Verfahren nach Anspruch 7, **dadurch gekennzeichnet, dass** die Verschraubungen (23) im drucklosen Zustand des Extraktionsreaktors (3) von der Sicherungsvorrichtung (25) zum Lösen freigegeben werden.

9. Verfahren nach einem der Ansprüche 1 bis 6, **dadurch gekennzeichnet, dass** das Extraktionsgut in mindestens einen Siebkorb (4) in dem Extraktionsreaktor (3) gegeben wird.

10. Vorrichtung zur Extraktion von Inhaltsstoffen aus einem Extraktionsgut, insbesondere aus zerkleinertem Pflanzenmaterial, mit einem flüssigen Lösungsmittel in einem Lösungsmittelbehälter (1) der Vorrichtung, der im Kreislauf (2) mit mindestens einem Extraktionsreaktor (3) mit dem Extraktionsgut verbunden ist, insbesondere zur Durchführung des Verfahrens nach den Ansprüchen 1 bis 6, wobei
- in den Kreislauf (2) ein Druckregelventil (11) zur Regulierung des Druckes des Lösungsmittels sowie ein Absperrventil (12) eingesetzt ist, wobei das Absperrventil (12) derart angeordnet ist, dass durch dessen Öffnen ein schlagartiger Druckabfall des Lösungsmittels im Extraktionsreaktor (3) erzeugt wird, **dadurch gekennzeichnet, dass**
- im Kreislauf (2) zwischen dem Lösungsmittelbehälter (1) und einem Wärmetauscher (8) zur Temperierung des Lösungsmittels eine Pumpe (9) mit umkehrbarer Förderrichtung angeordnet ist und
- in dem Zentrum des Extraktionsreaktors (3) ein vertikales Verteilerrohr (5) für das Lösungsmittel angeordnet ist, das mit dem Vorlauf (7) in Verbindung steht.

11. Vorrichtung nach Anspruch 10, **dadurch gekennzeichnet, dass** das Druckregelventil (11) und das Absperrventil (12) in einen Rücklauf (10) des Kreislaufes (2) eingesetzt sind.

12. Vorrichtung nach Anspruch 10 oder 11, **dadurch gekennzeichnet, dass** das Absperrventil (12) in einer Bypassleitung (13) zu dem Druckregelventil (11) angeordnet ist.

13. Vorrichtung nach einem der Ansprüche 10 bis 12, **dadurch gekennzeichnet, dass** der Extraktionsreaktor (3) in seinem oberen Bereich mit einem Entlüftungsventil (16) versehen ist, das über eine Leitung (17) mit dem Lösungsmittelbehälter (1) gekoppelt ist.

14. Vorrichtung nach Anspruch 13, **dadurch gekennzeichnet, dass** der Lösungsmittelbehälter (1) eine über ein Ventil (20) mit dem Rücklauf (10) verbundene Abluftleitung (21) umfasst.

15. Vorrichtung nach einem der Ansprüche 10 bis 14, **dadurch gekennzeichnet, dass** in dem Rücklauf (10) eine Absperrarmatur (19) eingesetzt ist, deren Schließen bei entsprechender Förderrichtung der Pumpe (9) einen Unterdruck in dem Extraktionsreaktor (3) bewirkt.

16. Vorrichtung nach einem der Ansprüche 10 bis 15, **dadurch gekennzeichnet, dass** in dem Extraktionsreaktor (3) mindestens ein Siebkorb (4) zur Aufnahme des Extraktionsgutes eingesetzt ist.

17. Vorrichtung nach einem der Ansprüche 10 bis 16, **dadurch gekennzeichnet, dass** einem Deckel (24) des Extraktionsreaktors (3) eine Sicherungsvorrichtung (25) zugeordnet ist, die bei einer Druckbeaufschlagung des Extraktionsreaktors (3) ein Öffnen des Deckels (24) verhindert.

18. Vorrichtung nach Anspruch 17, **dadurch gekennzeichnet, dass** die Sicherungsvorrichtung (25) den Deckel (24) im drucklosen Zustand des Extraktionsreaktors (3) freigibt.

19. Vorrichtung nach Anspruch 17 oder 18, **dadurch gekennzeichnet, dass** die Sicherungsvorrichtung (25) einen an dem Extraktionsreaktor (3) zwangsgesteuert schwenkbar angeordneten Ring (27) umfasst, der sich in seiner Sicherungslage konzentrisch zu dem Deckel (24) unmittelbar oberhalb den Deckel (24) im geschlossenen Zustand fixierender Verschraubungen (23) befindet.

20. Vorrichtung nach einem der Ansprüche 17 bis 19, **dadurch gekennzeichnet, dass** die Sicherungsvorrichtung (25) eine zum einen dem Extraktionsreaktor (3) und zum anderen dem Ring (27) zugeordnete Kolben-Zylinder-Einheit (29) zum Verschwenken des Ringes (27) aufweist.

21. Vorrichtung nach einem der Ansprüche 17 bis 20, **dadurch gekennzeichnet, dass** die Kolben-Zylinder-Einheit (29) mit dem Ventil (20) derart in Verbindung steht, dass ein Öffnen des Ventils (20) zum Entlüften des Extraktionsreaktors (3) ein Verschwenken des Ringes (27) in seine Nicht-Sicherungslage, in der die Verschraubungen (23) zu lösen sind, bewirkt.

22. Vorrichtung nach Anspruch 20 oder 21, **dadurch gekennzeichnet, dass** die Kolben-Zylinder-Einheit (29) unter Zwischenschaltung eines Winkelstückes (26) mit dem Ring (27) gekoppelt ist, wobei der eine Winkelschenkel (28), an dem die extraktionsreaktorfeste Kolben-Zylinder-Einheit (29) angreift, an seinem freien Ende an dem Extraktionsreaktor (3) gelagert und der andere Winkelschenkel (30) endseitig mit dem Ring (27) verbunden ist.

## Claims

1. Method for extracting components from a material being extracted, in particular from comminuted plant material, with a liquid solvent which flows through at least one extraction reactor (3) with the material being extracted under pressure applied with sudden changes in pressure, **characterised in that** the solvent flows through the extraction reactor (3) with changes in the flow direction, the solvent being conducted through a central distributor (5) within the extraction reactor (3).

2. Method according to claim 1, **characterised in that** the solvent is temperature-controlled.

3. Method according to claim 1, **characterised in that** a gas present in the extraction reactor (3) is discharged via a vent valve (16).

4. Method according to claim 3, **characterised in that** the gas is conducted into a solvent container (1).

5. Method according to one of the claims 1 to 4, **characterised in that**, when drying material being extracted in the extraction reactor (3), a low pressure is produced.

6. Method according to claim 4 or 5, **characterised in that**, before emptying the extraction reactor (3), the gas from the solvent container (1) overflows into the extraction reactor (3).

7. Method according to one of the claims 1 to 6, **characterised in that** the extraction reactor (3) is safeguarded against pressure impingement of the solvent by a safety device (25) in such a manner that screw fittings (23) which fix a cover (24) cannot be released.

8. Method according to claim 7, **characterised in that** the screw fittings (23) are released for detachment in the pressure-free state of the extraction reactor (3) by the safety device (25).

9. Method according to one of the claims 1 to 6, **characterised in that** the material being extracted is placed in at least one strainer basket (4) in the extraction reactor (3).

10. Device for extracting components from a material being extracted, in particular from comminuted plant material, with a liquid solvent in a solvent container (1) of the device which is connected in the circulation (2) to at least one extraction reactor (3) with the material being extracted, in particular for implementing the method according to claims 1 to 6, wherein
- a pressure control valve (1) for regulating the pressure of the solvent and also a stop valve (12) is inserted in the circulation (2), the stop valve (12) being disposed in such a manner that, by opening thereof, a sudden drop in pressure of the solvent in the extraction reactor (3) is produced,
**characterised in that**
- in the circulation (2) between the solvent container (1) and a heat exchanger (8) for temperature control of the solvent, a pump (9) with a reversible conveying direction is disposed and
- in the centre of the extraction reactor (3), a vertical distributor (5) for the solvent is disposed, said distributor being connected to the pre-flow (7).

11. Device according to claim 10, **characterised in that** the pressure control valve (11) and the stop valve (12) are inserted in a return flow (10) of the circulation (2).

12. Device according to claim 10 or 11, **characterised in that** the stop valve (12) is disposed in a bypass pipe (13) to the pressure control valve (11).

13. Device according to one of the claims 10 to 12, **characterised in that** the extraction reactor (3) is provided in its upper region with a vent valve (16) which is coupled via a pipe (17) to the solvent container (1).

14. Device according to claim 13, **characterised in that** the solvent container (1) comprises an outflow air pipe (21) which is connected via a valve (20) to the return flow (10).

15. Device according to one of the claims 10 to 14, **characterised in that** a shut-off device (19) is inserted in the return flow (10), closing of which with a corresponding conveying direction of the pump (9) effects a low pressure in the extraction reactor (3).

16. Device according to one of the claims 10 to 15, **characterised in that** at least one strainer basket (4) is inserted in the extraction reactor (3) for receiving the material being extracted.

17. Device according to one of the claims 10 to 16, **characterised in that** a safety device (25) is assigned to a cover (24) of the extraction reactor (3) and prevents opening of the cover (24) when the extraction reactor (3) is subjected to a pressure impingement.

18. Device according to claim 17, **characterised in that** the safety device (25) releases the cover (24) in the pressure-free state of the extraction reactor (3).

19. Device according to claim 17 or 18, **characterised in that** the safety device (25) comprises a ring (27) which is disposed pivotably on the extraction reactor (3) with constrained control, said ring being situated in its safety position concentrically relative to the cover (24), directly above the cover (24) in the closed state of the fixing screw fittings (23).

20. Device according to one of the claims 17 to 19, **characterised in that** the safety device (25) has a piston-cylinder unit (29) for pivoting the ring (27), which piston-cylinder unit is assigned, on the one hand, to the extraction reactor (3) and, on the other hand, to the ring (27).

21. Device according to one of the claims 17 to 20, **characterised in that** the piston-cylinder unit (29) is connected to the valve (20) in such a manner that opening the valve (20) in order to vent the extraction reactor (3) effects pivoting of the ring (27) into its non-safety position in which the screw fittings (23) can be released.

22. Device according to claim 20 or 21, **characterised in that** the piston-cylinder unit (29) is coupled to the ring (27) with intermediate connection of an angular piece (26), the one angular member (28), on which the piston-cylinder unit (29) which is fixed on the extraction reactor engages, being mounted at its free end on the extraction reactor (3) and the other angular member (30) being connected on the end side to the ring (27).

## Revendications

1. Procédé d'extraction de substances contenues dans un produit d'extraction, en particulier dans un matériau végétal fragmenté, avec un solvant liquide qui circule avec le produit d'extraction à travers au moins un réacteur d'extraction (3), sous l'action d'une pression avec des changements brusques de pression, **caractérisé en ce que** le solvant circule à travers le réacteur d'extraction (3) avec changement du sens d'écoulement, le solvant étant guidé à travers un tube de distribution central (5) à l'intérieur du réacteur d'extraction (3).

2. Procédé selon la revendication 1, **caractérisé en ce que** le solvant est tempéré.

3. Procédé selon la revendication 1, **caractérisé en ce qu'**un gaz, présent dans le réacteur d'extraction (3), est évacué par une soupape de purge d'air (16).

4. Procédé selon la revendication 3, **caractérisé en ce que** le gaz est acheminé dans un réservoir de solvants (1).

5. Procédé selon l'une des revendications 1 à 4, **caractérisé en ce qu'**une dépression est produite en cas de séchage du produit d'extraction dans le réacteur d'extraction (3).

6. Procédé selon la revendication 4 ou 5, **caractérisé en ce qu'**avant de vidanger le réacteur d'extraction (3), le gaz passe du réservoir de solvant (1) dans le réacteur d'extraction (3).

7. Procédé selon l'une des revendications 1 à 6, **caractérisé en ce qu'**avant de faire agir la pression sur le solvant, le réacteur d'extraction (3) est protégé avec un dispositif de sûreté (25) de manière que des vissages (23), fixant un couvercle (24), ne puissent être desserrés.

8. Procédé selon la revendication 7, **caractérisé en ce que** le desserrage des vissages (23) est autorisé par le dispositif de sûreté (25), à l'état hors pression du réacteur d'extraction (3).

9. Procédé selon l'une des revendications 1 à 6, **caractérisé en ce que** le produit d'extraction est introduit dans au moins un panier de tamisage (4) dans le réacteur d'extraction (3).

10. Dispositif d'extraction de substances contenues dans un produit d'extraction, en particulier dans un matériau végétal fragmenté, avec un solvant liquide dans un réservoir de solvant (1) du dispositif, lequel est relié au circuit (2) comportant au moins un réacteur d'extraction (3) avec le produit d'extraction, en particulier pour la mise en oeuvre du procédé selon les revendications 1 à 6, dans lequel
- dans le circuit (2) est insérée une soupape de régulation de pression (11) pour réguler la pression du solvant ainsi qu'une vanne d'arrêt (12), la vanne d'arrêt (12) étant disposée de manière que son ouverture provoque une chute brusque de la pression du solvant dans le réacteur d'extraction (3), **caractérisé en ce que**
- dans le circuit (2), entre le réservoir de solvant (1) et un échangeur de chaleur (8) destiné à tempérer le solvant, est disposée une pompe (9) avec sens de refoulement inversable, et
- au centre du réacteur d'extraction (3) est disposé un tube de distribution vertical (5) pour le solvant, lequel est en liaison avec l'aller (7).

11. Dispositif selon la revendication 10, **caractérisé en ce que** la soupape de régulation de pression (11) et la vanne d'arrêt (12) sont insérées dans un retour (10) du circuit (2).

12. Dispositif selon la revendication 10 ou 11, **caractérisé en ce que** la vanne d'arrêt (12) est disposée dans une conduite de dérivation (13) de la soupape de régulation de pression (11).

13. Dispositif selon l'une des revendications 10 à 12, **caractérisé en ce que** le réacteur d'extraction (3) est pourvu, dans sa zone supérieure, d'une soupape de purge d'air (16) qui est couplée au réservoir de solvant (1) par une conduite (17).

14. Dispositif selon la revendication 13, **caractérisé en ce que** le réservoir de solvant (1) comprend une conduite de purge d'air (21) reliée par une soupape (20) au retour (10).

15. Dispositif selon l'une des revendications 10 à 14, **caractérisé en ce que** dans le retour (10) est inséré un robinet d'arrêt (19) dont la fermeture provoque une dépression dans le réacteur d'extraction (3), en cas de sens de refoulement correspondant de la pompe (9).

16. Dispositif selon l'une des revendications 10 à 15, **caractérisé en ce que** dans le réacteur d'extraction (3) est inséré au moins un panier de tamisage (4) destiné à recevoir le produit d'extraction.

17. Dispositif selon l'une des revendications 10 à 16, **caractérisé en ce qu'**à un couvercle (24) du réacteur d'extraction (3) est associé un dispositif de sûreté (25) qui empêche une ouverture du couvercle (24), lorsque le réacteur d'extraction (3) est soumis à pression.

18. Dispositif selon la revendication 17, **caractérisé en ce que** le dispositif de sûreté (25) libère le couvercle (24) à l'état hors pression du réacteur d'extraction (3).

19. Dispositif selon la revendication 17 ou 18, **caractérisé en ce que** le dispositif de sûreté (25) comprend un anneau (27) pivotant et commandé à force disposé sur le réacteur d'extraction (3), lequel anneau se trouve, dans sa position de sûreté, concentriquement au couvercle (24), directement au-dessus du couvercle (24), à l'état fermé de vissages (23) le fixant.

20. Dispositif selon l'une des revendications 17 à 19, **caractérisé en ce que** le dispositif de sûreté (25) comporte une unité à cylindre et piston (29), associée d'une part au réacteur d'extraction (3) et d'autre part à l'anneau (27), pour le pivotement de l'anneau (27).

21. Dispositif selon l'une des revendications 17 à 20, **caractérisé en ce que** l'unité à cylindre et piston (29) est en liaison avec la soupape (20), de manière qu'une ouverture de la soupape (20) pour la purge de l'air du réacteur d'extraction (3), provoque un pivotement de l'anneau (27) dans sa position de non-sûreté, dans laquelle les vissages (23) doivent être desserrés.

22. Dispositif selon la revendication 20 ou 21, **caractérisé en ce que** l'unité à cylindre et piston (29) est couplée à l'anneau (27) avec interposition d'une cornière (26), une branche (28) de la cornière, sur laquelle agit l'unité à cylindre et piston (29) solidaire du réacteur d'extraction, étant montée à son extrémité libre sur le réacteur d'extraction (3), et l'autre branche (30) de la cornière étant reliée à son extrémité à l'anneau (27).
